Europäisches Patentamt

European Patent Office

Office européen des brevets

(19)

(11) **EP 1 368 566 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(21) Anmeldenummer: **02719883.7**

(22) Anmeldetag: **21.02.2002**

(51) Int Cl.:
**F03D 7/02** *(2006.01)*    **F03D 11/02** *(2006.01)*
**F03D 11/00** *(2006.01)*

(86) Internationale Anmeldenummer:
**PCT/EP2002/001814**

(87) Internationale Veröffentlichungsnummer:
**WO 2002/068818 (06.09.2002 Gazette 2002/36)**

(54) **LUFTDICHTEABHÄNGIGE LEISTUNGSREGELUNG FÜR EINE WINDTURBINE**

ATMOSPHERIC DENSITY-DEPENDENT POWER ADJUSTMENT FOR WIND TURBINES

REGULATION DE PUISSANCE D'UNE TURBINE EOLIENNE EN FONCTION DE LA DENSITE ATMOSPHERIQUE

(84) Benannte Vertragsstaaten:
**AT BE CH CY DE DK ES FI FR GB GR IE IT LI LU MC NL PT SE TR**

(30) Priorität: **28.02.2001 DE 10109553**

(43) Veröffentlichungstag der Anmeldung:
**10.12.2003 Patentblatt 2003/50**

(73) Patentinhaber: **Wobben, Aloys**
**26607 Aurich (DE)**

(72) Erfinder: **Wobben, Aloys**
**26607 Aurich (DE)**

(74) Vertreter: **Eisenführ, Speiser & Partner**
**Patentanwälte Rechtsanwälte**
**Postfach 10 60 78**
**28060 Bremen (DE)**

(56) Entgegenhaltungen:
**EP-A- 0 884 833         WO-A-00/75508**
**WO-A-94/04820         DE-A- 19 844 258**
**DE-A- 19 948 194       US-A- 4 349 877**
**US-A- 4 651 017**

EP 1 368 566 B1

**Beschreibung**

Die vorliegende Erfindung betrifft eine Windenergieanlage mit einer Steuerungsvorrichtung zur Betriebsführung der Windenergieanlage und ein Verfahren zur Steuerung einer Windenergieanlage mit einer Steuerungsvorrichtung zur Betriebsführung.

Eine Windenergieanlage wandelt einen Teil der im Wind enthaltenen kinetischen Energie in elektrische Energie um. Dazu weist die Windenergieanlage einen Rotor auf, der dem Wind kinetische Energie entzieht und in Rotationsenergie umwandelt:

Aus DE 198 44 258 A1 ist eine Windenergieanlage sowie ein Verfahren zu ihrem Betrieb bekannt, bei welcher das Betriebsführungssystem in Abhängigkeit der von Sensoren am Standort der Windenergieanlage gemessenen Luftdichte die Abschaltgeschwindigkeit der Windenergieanlage bei abnehmender Luftdichte höher einstellt: Wenn also bei einer normalen Luftdichte die Abschaltgeschwindigkeit ihren vorbestimmten Wert einnimmt, erhöht sich die Abschaltgeschwindigkeit bei geringerer Luftdichte.

Aus US 4,651,017 ist eine Windenergieanlage sowie ein Verfahren zu ihrem Betrieb bekannt, bei welcher eine mit einem Sensor ausgestattete Schaltung die Windgeschwindigkeit vor dem Rotor erfasst, um die Umlaufgeschwindigkeit der Rotorblattspitzen der Windenergieanlage durch Variation der Belastung eines Generators, der mit dem Rotor verbunden ist, in Reaktion auf die gemessene Windgeschwindigkeit zu steuern.

In der Steuerungsvorrichtung einer Windenergieanlage ist eine Leistungskennlinie hinterlegt, welche der Steuerung der Windenergieanlage erlaubt, aus der ermittelten Rotordrehzahl, die von der Windgeschwindigkeit abhängig ist, die zugeordnete Generatorleistung zu ermitteln. Aus dieser Generatorleistung, welche die Windenergieanlage abgeben soll, ergibt sich die benötigte Erregerleistung und daraus wiederum das Generatormoment. Um dieses erforderliche Generatormoment zu erzeugen, muss der Rotor über den Antriebsstrang wenigstens dieses Drehmoment bereit stellen.

Die Leistung P der Windenergieanlage entspricht der durch den Rotorkreis der Windenergieanlage hindurchfließenden Energiemenge und ergibt sich aus der Querschnittsfläche F, die der Rotorkreisfläche entspricht, nach der Gleichung

$$P = \tfrac{1}{2}\, \rho\, v^3\, F \ \ [W].$$

Daraus ergibt sich bei einer gegebenen Windgeschwindigkeit v und einer vorgegebenen Rotorkreisfläche F die Abhängigkeit der Energiemenge von der Luftdichte $\rho$. Ist die Energiemenge zu gering, kann der Rotor dieses Moment nicht aufbringen und daher sinkt die Rotordrehzahl in Folge des zu hohen Generatormomentes

Aufgabe der Erfindung ist es, den Betrieb einer Windenergieanlage soweit zu optimieren, dass stets eine größtmögliche Energiemenge, also eine größtmögliche Leistung bereitgestellt werden kann.

Die erfindungsgemäße Aufgabe wird durch ein Verfahren mit dem Merkmal nach Anspruch 1 bzw. durch eine Windenergieanlage mit dem Merkmal nach Anspruch 2 gelöst.

Bei bisherigen Windenergieanlagen ist neben einer Leistungskennlinie auch die Schnellaufzahl $\lambda$ vorgegeben. Die Schnellaufzahl $\lambda$ entspricht hierbei dem Quotienten aus der Umfangsgeschwindigkeit der Rotorblattspitze und der Windgeschwindigkeit. Wie bereits ausgeführt, ergibt sich dann, wenn die Leistungskennlinie nicht der entsprechenden Luftdichte angepasst ist, eine Abweichung der in der Steuerungsvorrichtung festgelegten Schnellaufzahl $\lambda$.

Bei der Erfindung berücksichtigt die Steuerungsvorrichtung die Höhe des Aufbauortes der Windenergieanlage und/oder die Höhe der Windenergieanlage, also die im Standort der Windenergieanlage gegebene Luftdichte.

Der Erfindung liegt die Erkenntnis zugrunde, dass mit zunehmender Höhe die Luftdichte geringer wird. Bezugsmaßstab ist stets die Meereshöhe Normalnull (NN). Je höher der Aufbauort der Windenergieanlage über NN liegt, umso geringer ist die Luftdichte, und entsprechend geringer ist die im Wind enthaltene Energie.

Bei der erfindungsgemäßen Lösung ist es besonders vorteilhaft, dass durch die Berücksichtigung der Höhe des Aufbauortes der Windenergieanlage über NN diese geringere Luftdichte in der Leistungskennlinie Berücksichtigung findet. Dadurch kann die einer Rotordrehzahl und damit einer bestimmten Schnelllaufzahl $\lambda$ zugeordnete, von der Windenergieanlage zu erzeugende Leistung entsprechend angepasst, also herab gesetzt werden, so dass das Generatormoment in Folge der durch die Steuerungsvorrichtung eingespeisten Erregerleistung das über den Rotor bereit gestellte Drehmoment nicht überschreitet. Dadurch bleibt der über die Leistungskennlinie festgelegte Wirkungsgrad erhalten und dem Wind kann die maximale Energie entnommen werden.

In einer besonders bevorzugten Ausführungsform der Erfindung, ist die Höhe des Aufbauortes der Windenergieanlage und/oder die Höhe der Windenergieanlage anpassbar, d. h., dass eine Standort-unabhängige Steuerung vorgesehen werden kann, welcher die entsprechenden Parameter über geeignete Einstellmittel wie Schalter, Konfigurationsparameter, etc., mitgeteilt werden können.

In einer bevorzugten Weiterbildung der Erfindung ist die Windenergieanlage mit einer Messvorrichtung zur Erfassung der Luftdichte und insbesondere bevorzugt mit einer Messvorrichtung zur Erfassung des Luftdruckes und der Temperatur ausgestattet. Aus diesen beiden Daten lässt sich die Luftdichte bestimmen. Dadurch kann auf eine Einstellung der Parameter verzichtet werden, da die Steuerungsvorrichtung diese Parameter selbsttätig aus den von der Messvorrichtung erhaltenen Daten ermittelt.

In einer bevorzugten Ausführungsform umfasst die Steuerungsvorrichtung wenigstens einen Mikroprozessor, so dass die Steuerung der Windenergieanlage auf der Basis einer Steuerungssoftware erfolgen kann.

Weiterhin wird die Aufgabe gelöst durch ein Verfahren, welches dadurch gekennzeichnet ist, dass

a) die Luftdichte erfasst wird,
b) aus der Luftdichte abgeleitete Signale, welche die Luftdichte repräsentieren, zu der Steuerungsvorrichtung übertragen werden, und
c) die Luftdichte von der Steuerungsvorrichtung bei der Betriebsführung berücksichtigt wird.

Dabei können in Schritt a) der Luftdruck und die Temperatur erfasst werden, und in Schritt b) können aus Luftdruck und Temperatur nach einem vorgegebenen Algorithmus Signale abgeleitet werden, welche die Luftdichte repräsentieren.

Vorteilhafte Weiterbildungen der Erfindung sind in den Unteransprüche angegeben.

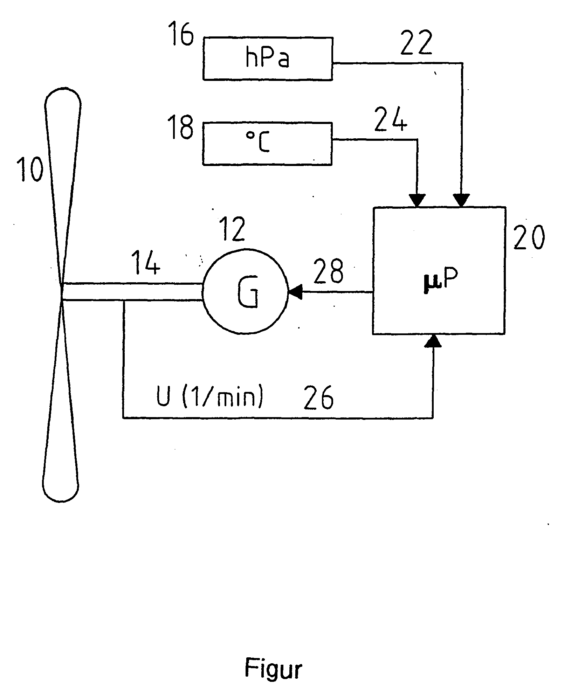

Nachfolgend wird ein Ausführungsbeispiel der vorliegenden Erfindung anhand der Figur näher erläutert. Dabei zeigt die Figur ein vereinfachtes Blockschaltbild der vorliegenden Erfindung.

In der Figur ist die Windenergieanlage dargestellt mit einem Rotor 10, einem Generator 12, einer Kraftübertragung 14 zwischen Rotor und Generator, einer Einrichtung zur Erfassung des Luftdruckes 16, einer Einrichtung zur Erfassung der Temperatur 18 und einer Steuerungsvorrichtung 20 mit einem Mikroprozessor.

Die Einrichtung zum Erfassen des Luftdruckes 16 ist über eine Verbindung 22 mit der Steuerungsvorrichtung 20 verbunden, die Einrichtung zur Erfassung der Temperatur ist über eine Verbindung 24 mit der Steuerungsvorrichtung 20 verbunden und über eine Verbindung 26 wird die Rotordrehzahl zu der Steuerungsvorrichtung 20 übertragen. Diese Verbindungen können z. B. galvanische Verbindungen oder andere geeignete Verbindungen wie drahtlose Verbindungen sein.

Aus den übertragenen Informationen ermittelt die Steuerungsvorrichtung 20 anhand vorgegebener Leistungsdaten die vom Generator abzugebende Leistung und beeinflusst über eine Verbindung 28 die dem Generator 12 zugeführte Erregerleistung.

Dabei kann die Wirkungsweise der Steuerungsvorrichtung 20 derart vorgegeben sein, dass Änderungen der Luftdichte, die sich aus Änderungen des Luftdruckes bzw. der Temperatur ermitteln lassen, nur dann von der Steuerungsvorrichtung 20 berücksichtigt werden, wenn sie einen vorgebbaren Betrag überschreiten und/oder diese Änderungen für eine vorgebbare Zeit ermittelt werden.

Selbstverständlich ist es statt der Erfassung der Luftdichte auch möglich, einen Wert für die Luftdichte am jeweiligen Standort vorzugeben. Hierbei wird beispielsweise auch die Höhe über NN der Windenergieanlage bzw. der Rotor-Nabe der Windenergieanlage berücksichtigt Dementsprechend kann auch ein mittlerer Wert für die entsprechende Luftdichte in der vorgegebenen Höhe vorgegeben und in der Steuerungsvorrichtung gespeichert werden. Durch die Erfindung wird mithin die jeweilige Leistungskennlinie einer Windenergieanlage auch auf die entsprechende Luftdichte am Ort der Windenergieanlage angepasst. Dies erlaubt es, den Wirkungsgrad der Windenergieanlage stets auf den maximal möglichen Wert zu halten, und zwar auch dann, wenn die Luftdichte im erheblichen Maße schwankt bzw. die Windenergieanlage in einigen 100 Metern über NN aufgestellt wird, auch wenn die Leistungskennlinie zunächst einmal für einen Standort eine Höhe 00 über NN ermittelt.

**Patentansprüche**

1. Verfahren zur Steuerung einer Windenergieanlage mit einem elektrischen Generator (12) unter Verwendung von statistischen, eingegebenen und/oder gemessenen Luftdichtedaten am Ort der Windenergieanlage, wobei mittels einer Steuerungsvorrichtung (20), welche die Luftdichtedaten verarbeitet, der Generator (12) der Windenergieanlage gesteuert wird, **dadurch gekennzeichnet, dass** abhängig von der Luftdichte Leistungsdaten des Generators (12), insbesondere eine dem Generator (12) zugeführte Erregerleistung, eingestellt werden.

2. Windenergienanlage mit einem elektrischen Generator (12) und einer Steuerungseinrichtung (20) zur Betriebsführung des Generators (12) der Windenergieanlage, wobei Mittel zur Erfassung und/oder Einstellung von Luftdichtedaten vorgesehen sind, wobei die erfassten und/oder eingestellten Luftdichtedaten in der Steuerungseinrichtung (20) verarbeitet werden,
   **dadurch gekennzeichnet, dass** unter Berücksichtigung der erfassten und/oder eingestellten Daten der Luftdichte Leistungsdaten der vom Generator (12) der Windenergieanlage abzugebenden Leistung, insbesondere eine dem Generator (12) zugeführte Erregerleistung, einstellbar sind.

3. Windenergieanlage nach Anspruch 2,
   **dadurch gekennzeichnet, dass** eine Messvorrichtung (16, 18) zur Erfassung der Luftdichte vorgesehen ist, wobei die Messvorrichtung (16, 18) mit der Steuerungsvorrichtung (20) verbunden ist.

4. Windenergieanlage nach Anspruch 3,
   **dadurch gekennzeichnet, dass** die Messvorrichtung (16, 18) wenigstens eine Einrichtung zur Erfassung des Luftdrucks (16) und der Temperatur (18) am Standort der Windenergieanlage umfasst.

**5.** Windenergieanlage nach einem der vorhergehenden Ansprüche,
**dadurch gekennzeichnet, dass** der Wert oder die Daten, die der jeweiligen Luftdichte entsprechen, über Eingabemittel vorgebbar sind und in der Steuerungsvorrichtung (20) gespeichert werden.

**6.** Windenergieanlage nach einem der vorhergehenden Ansprüche,
**dadurch gekennzeichnet, dass** die Steuerungsvorrichtung (20) einen Mikroprozessor enthält, in dem die Luftdichtedaten zusammen mit einem Steuerungsprogramm der Windenergieanlage verarbeitet werden.

**7.** Windenergieanlage nach einem der vorhergehenden Ansprüche,
**dadurch gekennzeichnet, dass** die Steuerungsvorrichtung die Höhe des Aufbauortes der Winderiergieanlage und/oder die Höhe der Windenergieanlage berücksichtigt.


**Claims**

**1.** Method for controlling a wind power installation comprising an electrical generator (12), using statistical, inputted and/or measured air density data at the location of the wind power installation, wherein the generator (12) of the wind power installation is controlled by means of a control device (20) which processes the air density data,
**characterised in that** power data of the generator (12), especially an exciter power supplied to the generator (12), are set in dependence on the air density.

**2.** Wind power installation comprising an electrical generator (12) and a control device (20) for operation management of the generator (12) of the wind power installation, wherein there are provided means for detecting and/or setting air density data, wherein the detected and/or set air density data are processed in the control device (20),
**characterised in that** power data of the power to be delivered by the generator (12) of the wind power installation, especially an exciter power supplied to the generator (12), can be set taking account of the detected and/or set data in respect of the air density.

**3.** Wind power installation according to claim 2,
**characterised in that** there is provided a measuring device (16, 18) for detecting the air density, wherein the measuring device (16, 18) is connected to the control device (20).

**4.** Wind power installation according to claim 3,
**characterised in that** the measuring device (16, 18) includes at least one device for detecting the air pressure (16) and the temperature (18) at the site of the wind power installation.

**5.** Wind power installation according to any one of the preceding claims,
**characterised in that** the value or the data that correspond to the respective air density are predeterminable by way of input means and are stored in the control device (20).

**6.** Wind power installation according to any one of the preceding claims,
**characterised in that** the control device (20) includes a microprocessor in which the air density data are processed together with a control program of the wind power installation.

**7.** Wind power installation according to any one of the preceding claims,
**characterised in that** the control device takes account of the height of the location at which the wind power installation is erected and/or the height of the wind power installation.


**Revendications**

**1.** Procédé de contrôle d'une installation éolienne avec un générateur électrique (12) en utilisant des données de densité atmosphérique statistiques, entrées et/ou mesurées sur le site d'implantation de l'installation éolienne, le générateur (12) de l'installation éolienne étant contrôlé au moyen d'un dispositif de contrôle (20) qui traite les données de densité atmosphérique,
**caractérisé en ce que**, des données de puissance du générateur (12), en particulier une puissance d'excitation amenée au générateur (12), sont ajustées en fonction de la densité atmosphérique.

**2.** Installation éolienne avec un générateur électrique (12) et un dispositif de contrôle (20) pour gérer l'exploitation du générateur (12) de l'installation éolienne, des moyens d'enregistrement et/ou d'ajustement de données de densité atmosphérique étant prévus, les données de densité atmosphérique enregistrées et/ou ajustées étant traitées dans le dispositif de contrôle (20),
**caractérisée en ce que**, en tenant compte des données enregistrées et/ou ajustées de la densité atmosphérique, des données de puissance de la puissance à délivrer par le générateur (12) de l'installation éolienne, en particulier une puissance d'excitation amenée au générateur (12), peuvent être ajustées.

**3.** Installation éolienne selon la revendication 2, **caractérisée en ce qu'**un dispositif de mesure (16, 18) est prévu pour enregistrer la densité atmosphérique, le dispositif de mesure (16, 18) étant relié au dispositif de contrôle (20).

4.  Installation éolienne selon la revendication 3, **caractérisée en ce que** le dispositif de mesure (16, 18) comprend au moins un dispositif d'enregistrement de la pression atmosphérique (16) et de la température (18) sur le site d'implantation de l'installation éolienne.

5.  Installation éolienne selon l'une quelconque des revendications précédentes, **caractérisée en ce que** la valeur ou les données qui correspondent à la densité atmosphérique respective peuvent être définies via des moyens d'entrée et sont sauvegardées dans le dispositif de contrôle (20).

6.  Installation éolienne selon l'une quelconque des revendications précédentes, **caractérisée en ce que** le dispositif de contrôle (20) contient un microprocesseur, dans lequel les données de densité atmosphérique sont traitées ensemble avec un programme de contrôle de l'installation éolienne.

7.  Installation éolienne selon l'une quelconque des revendications précédentes, **caractérisée en ce que** le dispositif de contrôle tient compte de la hauteur du lieu d'édification de l'installation éolienne et/ou de la hauteur de l'installation éolienne.

Figur